# FASCICULE DE BREVET EUROPEEN

(11) **EP 3 579 588 B1**
(45) Date de publication et mention de la délivrance du brevet: **24.03.2021**
(21) Numéro de dépôt: 19175995.0
(22) Date de dépôt: 22.05.2019
(51) Int. Cl.: H04W 4/80, G06Q 20/32, G06Q 20/34, H04W 4/30, G06F 11/07, G06F 11/20, H04L 29/14, H04W 12/00, H04W 12/06

(54) **PROCÉDÉ DE GESTION D'UNE PROCÉDURE D'UN MODE DE SECOURS DE TRANSACTION, ET DISPOSITIF ASSOCIÉ**
VERFAHREN ZUR STEUERUNG EINES TRANSAKTIONSSICHERUNGSVORGANGS, UND ENTSPRECHENDE VORRICHTUNG
METHOD FOR MANAGING A PROCEDURE FOR A BACK-UP MODE OF A TRANSACTION, AND ASSOCIATED DEVICE

(30) Priorité: 08.06.2018 FR 1855026
(43) Date de publication de la demande: 11.12.2019
(73) Titulaire: IDEMIA France, 92400 Courbevoie (FR)
(72) Inventeur: MOUROUX, Benoit, 92400 COURBEVOIE (FR); ADJAZ, Aghiles, 92400 COURBEVOIE (FR)
(74) Mandataire: Cabinet Beau de Loménie

(56) Documents cités:
- US-A1- 2008 076 425
- US-A1- 2011 321 173
- Emv: "EMV Integrated Circuit Card Specifications for Payment Systems Book 3 Application Specification Version 4.3", , 1 novembre 2011 (2011-11-01), XP055527907, Extrait de l'Internet: URL:https://www.emvco.com/wp-content/plugi ns/pmpro-customizations/oy-getfile.php?u=/ wp-content/uploads/documents/EMV_v4.3_Book _3_Application_Specification_2012060706211 0791.pdf [extrait le 2018-11-28]

## Description

### Arrière-plan de l'invention

La présente invention se rapporte au domaine des transactions effectuées au moyen d'un dispositif électronique, et concerne plus particulièrement un procédé de gestion d'une procédure d'un mode de secours de transaction, pouvant être activée en cas d'attaque ou de panne sur un réseau de transactions.

De façon connue, de nombreuses transactions bancaires sont effectuées en ligne, au moyen d'un dispositif électronique, via un réseau bancaire électronique.

Le réseau bancaire électronique est une cible pour les pirates informatiques ayant des motivations financières ou politiques. En effet, une attaque informatique sur un réseau bancaire électronique peut avoir de mauvaises répercussions économiques à l'échelle d'un pays. Lorsque le pays est un pays développé dans lequel la plupart des transactions sont effectuées par voie électronique, une telle attaque peut typiquement paralyser l'économie du pays.

En plus du coût financier, une attaque ou une panne informatique sur un réseau bancaire électronique a un impact négatif sur l'expérience des utilisateurs du réseau bancaire et sur la réputation d'un établissement bancaire utilisant le réseau bancaire.

Il existe donc un besoin pour une solution permettant d'améliorer la résilience des réseaux bancaires électroniques, en limitant l'impact négatif d'une attaque informatique sur les utilisateurs et de l'établissement bancaire.

Le document US 2011/321173 décrit un système de vente au détail multimode. Le document « EMV Integrated Circuit Card Spécifications For Payment Systems Book 3 Application Spécification Version 4.3 » (XP055527907), publié le 1^{er} novembre 2011, décrit une carte à circuit intégré dans le cadre de la norme EMV. Le document US 2008/076425 décrit un procédé pour manager des ressources.

### Obiet et résumé de l'invention

La présente invention concerne un procédé de gestion d'une procédure de secours d'un mode de secours de transaction, pouvant être activée en cas d'attaque informatique ou de panne sur un réseau de transactions, mis en œuvre par un dispositif électronique apte à réaliser une transaction selon un mode normal ou le mode de secours, ledit procédé comprenant les étapes suivantes :
- réception d'une commande d'activation de ladite procédure du mode de secours, comprenant un identifiant de la procédure et une première donnée chiffrée,
- vérification de la commande d'activation, comprenant une vérification de ladite première donnée chiffrée,
- si la vérification de la commande est réussie, activation de la procédure de secours.

L'activation d'une procédure d'un mode de secours, au niveau de laquelle l'attaque ou la panne n'a pas d'impact, permet d'améliorer la résilience du réseau de transactions. Cette activation permet de limiter l'impact négatif d'une attaque informatique sur les utilisateurs et l'établissement bancaire, les utilisateurs pouvant continuer à effectuer des opérations au moyen de la procédure de secours.

Dans un mode de réalisation particulier, la première donnée chiffrée est un code d'authentification calculé en fonction d'une clef privée, ladite clef privée étant obtenue en utilisant l'identifiant de ladite procédure.

Dans un mode de réalisation particulier, l'étape de vérification comprend une vérification que la valeur de l'identifiant de ladite procédure est supérieure à la valeur d'un identifiant de procédure stocké dans le dispositif électronique.

Dans un mode de réalisation particulier, le procédé comprend, après l'activation de la procédure de secours et suite à une initialisation d'une transaction entre le dispositif électronique et un lecteur, une étape d'envoi d'un message audit lecteur comprenant une requête de consultation d'un serveur de mode normal du réseau de transactions.

Dans un mode de réalisation particulier, le procédé comprend, sous réception d'un message indiquant que la consultation du serveur du mode normal a échoué, une étape d'envoi audit lecteur d'un cryptogramme comprenant au moins une information sur ladite procédure parmi les informations suivantes :
- une date de début de ladite procédure,
- une date de fin de ladite procédure,
- ledit identifiant de ladite procédure,
- une indication selon laquelle ledit cryptogramme est généré lors de la mise en œuvre de ladite procédure.

Dans un mode de réalisation particulier, ledit message reçu comprend une date de la transaction, le procédé comprenant les étapes suivantes :
- vérification que la date de transaction est comprise entre une date de début et une date de fin de la procédure,
- si la date de transaction est antérieure à la date de début ou postérieure à la date de fin de la procédure, désactivation de ladite procédure.

Dans un mode de réalisation particulier, le message reçu comprend le montant de la transaction, le procédé comprenant les étapes suivantes :
- incrémentation d'un compteur de nombre de transaction,
- incrémentation d'un compteur de montant de transaction,
- si le compteur de nombre de transaction incrémenté est inférieur à une valeur seuil de nombre de transaction et si le compteur de montant de transaction est inférieur à une valeur seuil de montant de transaction, une étape d'acceptation de la transaction.

Dans un mode de réalisation particulier, le procédé comprend une étape d'authentification d'un utilisateur du dispositif électronique, l'étape de vérification de la commande d'activation étant mise en œuvre si l'étape d'authentification est réussie.

Dans un mode de réalisation particulier, le procédé comprend une étape de désactivation de ladite procédure, sous réception d'une commande de désactivation de ladite procédure.

L'invention concerne en outre un dispositif électronique, apte à mettre en œuvre un procédé tel que décrit ci-dessus.

Dans un mode particulier de réalisation, les différentes étapes du procédé de gestion sont déterminées par des instructions de programmes d'ordinateur.

En conséquence, l'invention vise aussi un programme d'ordinateur sur un support d'informations (ou support d'enregistrement), ce programme étant susceptible d'être mis en œuvre par un dispositif électronique ou plus généralement dans un ordinateur, ce programme comportant des instructions adaptées à la mise en œuvre des étapes d'un procédé de gestion tel que défini ci-dessus.

Ce programme peut utiliser n'importe quel langage de programmation, et être sous la forme de code source, code objet, ou de code intermédiaire entre code source et code objet, tel que dans une forme particulièrement compilée, ou dans n'importe quelle autre forme souhaitable.

L'invention vise aussi un support d'information (ou support d'enregistrement) lisible par un dispositif électronique ou plus généralement par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible (de type « EEPROM » ou « Flash NAND » par exemple), ou tel qu'une « ROM », par exemple un « CD ROM » ou une « ROM » de circuit microélectronique, ou encore un moyen d'enregistrement magnétique, par exemple une disquette (« floppy disc ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 représentent, de manière schématique, des systèmes de gestion conformes à des exemples de modes de réalisation de l'invention ;
- les figures 3 et 4 représentent, sous forme d'un organigramme, les principales étapes de phases d'activation de procédés de gestion conformes à des exemples de modes de réalisation de l'invention ;
- la figure 5 représente, sous forme d'un organigramme, les principales étapes d'une phase de paiement de procédés de gestion conformes à des exemples de modes de réalisation de l'invention ;
- la figure 6 représente, sous forme d'un organigramme, les principales étapes d'une phase de désactivation de procédés de gestion conformes à des exemples de modes de réalisation de l'invention ;
- la figure 7 représente, de manière schématique, les données utilisées lors d'une étape de génération d'un cryptogramme de procédés de gestion conformes à des exemples de modes de réalisation de l'invention.

### Description détaillée de plusieurs modes de réalisation

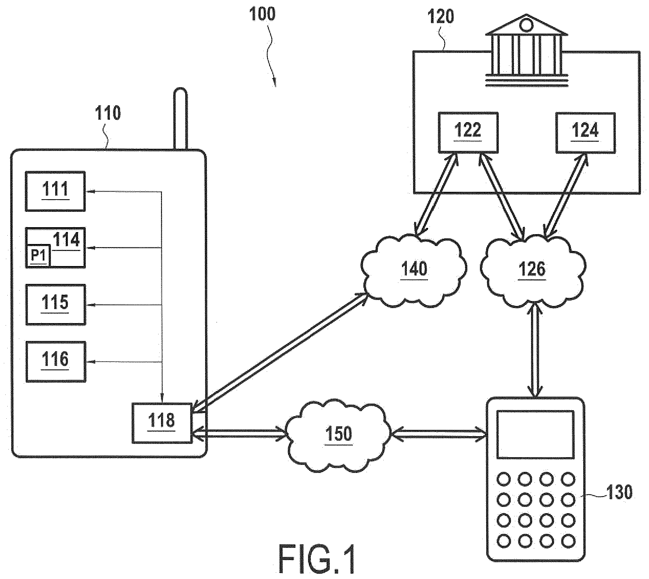

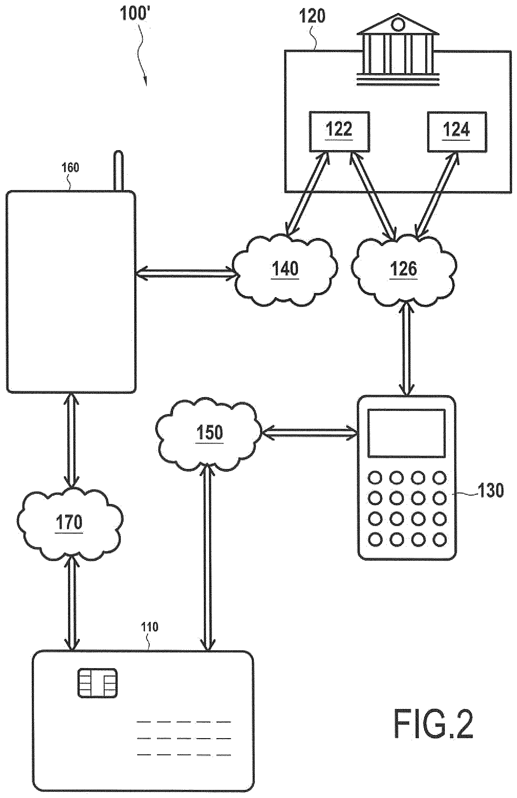

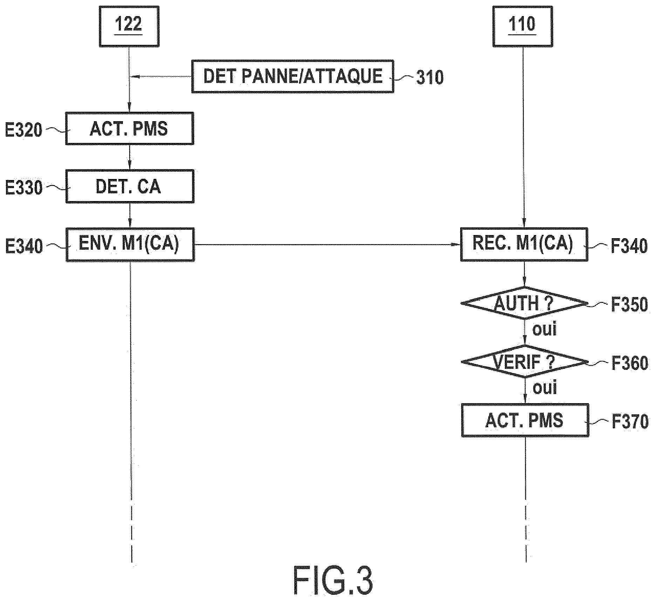

Les **figures 1** **et** **2** représentent, de manière schématique, des systèmes 100 ou 100' de gestion conformes à des exemples de mode de réalisation de l'invention, aptes à mettre en œuvre des procédés de gestion conformes à des exemples de modes de réalisation, par exemple le procédé décrit en référence aux figures 2, 4 et 5 pour le système 100 de la figure 1, ou le procédé décrit en référence aux figures 3, 4 et 5 pour le système 100' de la figure 2.

Le système 100, 100' comprend un premier dispositif électronique 110, qui présente l'architecture conventionnelle d'un ordinateur. Le premier dispositif électronique 110 comprend notamment un processeur 112, une mémoire morte 114 (de type « ROM »), une mémoire non volatile réinscriptible 115 (de type « EEPROM » ou « Flash NAND » par exemple), une mémoire volatile réinscriptible 116 (de type « RAM »), et une interface de communication 118.

Dans cet exemple, la mémoire morte 114 constitue un support d'informations (ou d'enregistrement) conforme à un mode de réalisation particulier de l'invention. Dans la mémoire morte 114 est stocké un programme d'ordinateur P1 permettant au premier dispositif électronique 110 de mettre en œuvre un procédé de gestion conforme à un exemple de mode de réalisation de l'invention, ou au moins une partie de ce procédé de gestion. En variante, le programme d'ordinateur P1 est stocké dans la mémoire non volatile réinscriptible 115.

Le premier dispositif électronique 110 est apte à réaliser une transaction selon un mode normal de transaction ou un mode de secours de transaction.

L'expression « mode de transaction » désigne ici un ensemble de règles appliquées lors de la mise en œuvre d'une transaction.

Le mode normal de transaction est le mode de transaction utilisé par le dispositif électronique 110 dans des conditions normales d'utilisation. L'ensemble de règles appliquées lors de l'utilisation du mode normal est typiquement défini dans une spécification, par exemple la spécification EMV.

Le mode de secours de transaction est un mode de transaction utilisé à la place du mode normal de transaction lorsque le mode normal de transaction ne peut être utilisé, typiquement en cas d'attaque informatique ou de panne sur le réseau de transactions. L'ensemble des règles pouvant être appliquées lors de l'utilisation du mode de secours est décrit ci-après, en référence aux figures 3 à 6.

Afin de réaliser une transaction en mode normal ou en mode de secours, le premier dispositif électronique 110 peut utiliser une application pour la réalisation de transactions, typiquement stockée dans la mémoire morte 114 ou la mémoire non volatile réinscriptible 115 du premier dispositif électronique 110. Une telle application est par exemple implémentée par un opérateur de transactions tel qu'un établissement bancaire, typiquement un établissement bancaire gérant un compte bancaire de l'utilisateur du premier dispositif électronique 110, cette application pouvant ensuite être téléchargée par le premier dispositif électronique 110. L'application comprend typiquement le programme P1.

L'application peut comprendre une ou plusieurs données associées au mode de secours parmi les données suivantes :
- un identifiant d'une procédure PMS du mode de secours,
- une date de début de ladite procédure PMS,
- une date de fin de ladite procédure PMS,
- une valeur seuil d'un nombre de transactions pouvant être effectuées durant ladite procédure PMS,
- une valeur seuil d'un montant total de transaction pouvant être débité durant ladite procédure PMS,
- un compteur de nombre de transaction,
- un compteur de montant de transaction.

L'application peut en outre comprendre une première clef dédiée au mode de secours, une deuxième clef dédiée au mode de secours, et/ou un indicateur de mode de secours pouvant typiquement prendre la valeur « 0 » ou « 1 ».

En variante, ces données sont stockées dans la mémoire morte 114 ou la mémoire non volatile réinscriptible 115 du premier dispositif électronique 110, hors de l'application.

Le mode normal de transaction et le mode de secours de transaction sont typiquement gérés par des serveurs distincts d'un réseau 120 de transactions, le réseau 120 de transaction utilisant un réseau de télécommunications 126 et étant typiquement un réseau bancaire électronique.

Un réseau bancaire électronique utilise typiquement un réseau de télécommunication privé 126, utilisé par au moins un opérateur de transactions bancaire, chaque opérateur de transactions bancaire pouvant être un établissement bancaire ou un prestataire de service (assurant par exemple les compensations interbancaires). Les réseaux Visa ou Mastercard sont des exemples de réseaux bancaires électroniques.

Le mode de secours de transaction est notamment géré par au moins un serveur 122 de mode de secours du réseau de transactions, tandis que le mode normal de transaction est notamment géré par un serveur 124 de mode normal du réseau de transactions.

Une transaction est de plus réalisée au moyen d'un lecteur 130 associé à l'autre partie à la transaction (autre que l'utilisateur du premier dispositif électronique 110). Typiquement, le lecteur 130 est un téléphone portable, par exemple de type « smartphone », une tablette numérique, ou un ordinateur personnel.

Le système 100 ou 100' peut ainsi en outre comprendre le serveur 122 du mode de secours, le serveur 124 du mode normal, et/ou le lecteur 130.

Le serveur 122 du mode de secours, le serveur 124 du mode normal et/ou le lecteur 130 peuvent aussi présenter l'architecture conventionnelle d'un ordinateur, et peuvent chacun alors comporter notamment un processeur, une mémoire morte (de type « ROM »), une mémoire non volatile réinscriptible (de type « EEPROM » ou « Flash NAND » par exemple), une mémoire volatile réinscriptible (de type « RAM »), et une interface de communication.

Chaque mémoire morte peut constituer un support d'enregistrement conforme à un exemple de mode de réalisation de l'invention, lisible par le processeur associé et sur lequel est enregistré un programme d'ordinateur conforme à un exemple de mode de réalisation de l'invention. En variante, le programme d'ordinateur est stocké dans la mémoire non volatile réinscriptible associée. Le programme d'ordinateur peut permettre la mise en œuvre d'au moins une partie du procédé de gestion conforme à un exemple de mode de réalisation de l'invention.

Comme le montre la figure 1, le premier dispositif électronique 110 est par exemple un terminal fixe ou mobile tel qu'un téléphone portable, par exemple de type « smartphone », une tablette numérique, ou un ordinateur personnel.

Le premier dispositif électronique 110 est alors apte à communiquer avec le serveur 122 du mode de secours via un premier réseau de télécommunications 140, ce premier réseau de télécommunications 140 étant typiquement un réseau de longue portée, tel qu'un réseau Internet, un réseau Wifi, ou un réseau de téléphonie fixe ou mobile (de type 3G, 4G etc.).

En outre, le premier dispositif électronique 110 et le lecteur 130 sont aptes à communiquer entre eux via le premier réseau de télécommunication 140 ou un deuxième réseau de télécommunications 150. Le deuxième réseau de télécommunications 150 est typiquement un réseau de courte portée, tel qu'un réseau NFC (pour « Near Field Communication » en terminologie anglo-saxonne).

En outre, le lecteur 130, le serveur 124 du mode normal et/ou le serveur 122 du mode de secours sont aptes à communiquer entre eux via le réseau de télécommunications 126 utilisé par réseau 120 de transactions, ce réseau de télécommunications 126 étant par la suite appelé troisième réseau de télécommunications 126.

En variante, comme le montre la figure 2, le premier dispositif électronique 110 peut être une carte à puce (typiquement une carte bancaire), par exemple de format ID-1 spécifié dans la norme ISO/IEC 7810, présentant les dimensions 85,6 millimètres par 53,98 millimètres par 0,76 millimètres.

Le système 100' peut alors comprendre en outre un deuxième dispositif électronique 160, ce deuxième dispositif électronique 160 étant un terminal fixe ou mobile tel qu'un téléphone portable, par exemple de type « smartphone », une tablette numérique, ou un ordinateur personnel.

Le premier dispositif électronique 110 et le deuxième dispositif électronique 160 peuvent communiquer entre eux via un quatrième réseau de télécommunications 170, ce quatrième réseau de télécommunication 170 étant typiquement un réseau de courte portée, tel qu'un réseau NFC. Le quatrième réseau de télécommunications 170 peut être le même réseau que le deuxième réseau de télécommunications 150, ou un réseau distinct.

En outre, le deuxième dispositif électronique 160 est apte à communiquer avec le serveur 122 du mode de secours via le premier réseau de télécommunications 140. Le deuxième dispositif électronique 160 peut comprendre une application associée à l'opérateur de transactions.

En outre, le premier dispositif électronique 110 et le lecteur 130 sont aptes à communiquer entre eux via le premier réseau de télécommunication 140, le deuxième réseau de télécommunications 150, ou directement au moyens de contacts lorsque le premier dispositif électronique 110 est inséré dans le lecteur 130.

En outre, le lecteur 130, le serveur 124 du mode normal et/ou le serveur 122 du mode de secours sont aptes à communiquer entre eux via le troisième réseau de télécommunications 126.

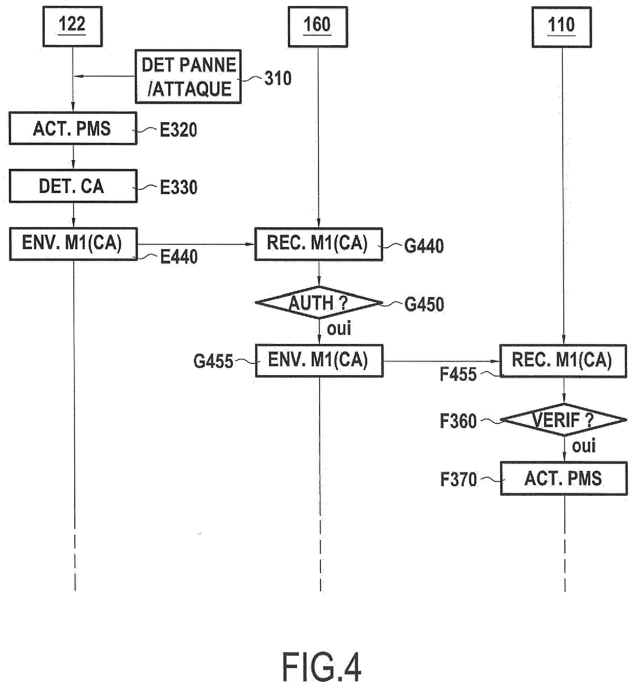

Les figures 3, 5 et 6, ainsi que les figures 4, 5 et 6 représentent des procédés de gestion d'une procédure d'un mode de secours de transaction conformes à des exemples de modes de réalisation de l'invention.

La **figure 3** représente une phase d'activation d'un procédé de gestion conforme à un exemple de mode de réalisation de l'invention, cette phase d'activation permettant d'activer une procédure PMS de secours du mode de secours, typiquement en cas d'attaque informatique sur le réseau de transactions ou de panne sur le réseau de transactions.

Dans la suite de la description de la figure 3, il est considéré que ladite phase d'activation est mise en œuvre par le système 100 de gestion de la figure 1. Cependant, le procédé peut être mis en œuvre par tout système de gestion comportant un terminal apte à réaliser une transaction selon le mode normal de transaction ou le mode de secours de transaction.

Dans une étape 310, une attaque informatique ou une panne sur le réseau 120 de transactions est détectée (typiquement au niveau du serveur 124 du mode normal).

Le serveur 122 du mode de secours peut alors activer, dans une étape E320, la procédure PMS du mode de secours au niveau du serveur 122 du mode de secours, typiquement après avoir demandé une autorisation d'activation à une ou plusieurs personnes responsables d'une telle activation.

La procédure de mode de secours est une procédure mise en œuvre pendant une période prédéterminée durant laquelle le mode normal de transaction ne peut être utilisé, en raison de la panne ou de l'attaque. Chaque procédure activée à l'étape E320 est ainsi associée à une seule panne ou attaque détectée à l'étape 310.

Le serveur 122 du mode de secours peut ensuite déterminer une commande d'activation CA de la procédure PMS du mode de secours (étape E330). La commande d'activation CA est typiquement une commande similaire aux commandes script définies par la norme EMV, les paramètres de la commande d'activation étant typiquement définis par la norme ISO 7816. Cette commande d'activation CA comprend un identifiant de la procédure PMS et une première donnée chiffrée.

L'identifiant de la procédure PMS permet identifier la procédure PMS du mode de secours parmi une ou plusieurs éventuelles autres procédures du mode de secours (associées à d'autres pannes ou attaques). Une nouvelle procédure du mode de secours est en effet activée à chaque détection d'une nouvelle attaque informatique ou d'une nouvelle panne sur le réseau de transactions, et donc à chaque nouvelle mise en œuvre de l'étape 310. Ainsi, l'identifiant de la procédure PMS est typiquement un numéro, incrémenté à chaque nouvelle mise en œuvre de l'étape 310.

La première donnée chiffrée est typiquement un code d'authentification calculé en fonction d'une clef privée, ladite clef privée étant obtenue en utilisant l'identifiant de la procédure PMS.

Par exemple, le code d'authentification est un code d'authentification de message (« MAC » pour « Message Authentication Code » en terminologie anglo-saxonne). Le code MAC peut être calculé en utilisant une clef de session dérivée de la première clef dédiée au mode de secours, l'identifiant de la procédure PMS étant utilisé comme valeur de dérivation. La première clef est typiquement une clef symétrique, utilisée pour calculer l'intégrité des données de la commande d'activation CA.

La commande d'activation CA peut en outre comprendre une ou plusieurs données concernant la procédure PMS de secours parmi les données suivantes :
- une date de début de la procédure PMS,
- une date de fin de la procédure PMS,
- une valeur seuil d'un nombre de transactions pouvant être effectuées durant ladite procédure PMS,
- une valeur seuil d'un montant total de transaction pouvant être débité durant ladite procédure PMS.

La commande d'activation CA comprend par exemple un champ CLA définissant la classe de l'instruction, un champ INS définissant l'instruction (cette instruction étant l'activation de la procédure PMS du mode de secours), des champs P1 et P2 définissant des paramètres de l'instruction, un champ LC définissant la longueur de la commande d'activation CA, un champ DATA comprenant l'identifiant de la procédure PMS de secours et éventuellement une ou plusieurs données concernant la procédure PMS de secours susmentionnées, et un champ MAC comprenant la première donnée chiffrée.

Le serveur 122 du mode de secours peut ensuite envoyer, dans une étape E340 et au premier dispositif électronique 110 (typiquement à l'application du premier dispositif électronique 110), via le premier réseau de télécommunications 140, un premier message M1 comprenant la commande d'activation CA.

Le premier message M1 peut en outre comprendre un message d'information destiné à l'utilisateur du premier dispositif électronique 110, indiquant typiquement que la procédure PMS du mode de secours peut être activée sur le premier dispositif électronique 110.

Sous réception F340 du premier message M1, le premier dispositif électronique 110 peut afficher le message d'information. Le premier dispositif électronique 110 peut aussi authentifier l'utilisateur du premier dispositif électronique 110 (étape F350). L'authentification de l'utilisateur est par exemple mise en œuvre au moyen d'un code d'authentification ou d'une donnée biométrique de l'utilisateur.

Dans une étape F360, le premier dispositif électronique 110 vérifie la commande d'activation CA reçue, cette étape E360 étant typiquement mise en œuvre si l'utilisateur est authentifié. Cette étape F360 de vérification comprend une vérification de la première donnée chiffrée.

Typiquement, le premier dispositif électronique 110 calcule une deuxième donnée chiffrée puis compare cette deuxième donnée chiffrée avec la première donnée chiffrée. Si la deuxième donnée chiffrée est identique à la première donnée chiffrée, la première donnée chiffrée est vérifiée. Ainsi, la deuxième donnée chiffrée est typiquement un code d'authentification calculé en fonction d'une clef privée, ladite clef privée étant obtenue en utilisant l'identifiant de la procédure PMS, tel que le code MAC, calculé en utilisant une clef de session dérivée de la première clef dédiée au mode de secours, l'identifiant de la procédure PMS étant utilisé comme valeur de dérivation.

En outre, l'étape F360 de vérification peut comprendre une vérification que la valeur de l'identifiant de ladite procédure PMS est supérieure à la valeur de l'identifiant de procédure stocké dans le premier dispositif électronique 110, qui correspond à ce stade du procédé à la précédente détection 310 d'attaque informatique ou de panne sur le réseau de transactions.

L'étape F360 de vérification peut aussi comprendre une vérification que la procédure PMS n'est pas déjà activée.

Plus précisément, le premier dispositif électronique 110 vérifie si l'indicateur du mode de secours n'est pas à la valeur « 1 ». Cette vérification permet de contrer une éventuelle attaque au niveau du premier dispositif électronique 110. En effet, comme décrit ci-dessous, l'activation de la procédure PMS peut comprendre une réinitialisation d'une ou plusieurs données associées au mode de secours, telles que par exemple le montant total de transaction. La vérification de l'indicateur du mode de secours permet d'empêcher plusieurs réinitialisations successives malveillantes de ces données.

Si la vérification de la commande d'activation CA est réussie, le premier dispositif électronique 110 active la procédure PMS de secours au niveau du premier dispositif électronique 110 (étape F370).

Cette étape F370 d'activation peut comprendre une initialisation ou une réinitialisation d'une ou plusieurs données stockées par le dispositif électronique 110 et associées au mode de secours. Par exemple :
- les dates de début et de fin de la procédure PMS stockés par le dispositif électronique 110 peuvent être mises à jour en fonction des dates de début et de fin de la procédure PMS reçues à l'étape F340,
- le compteur de nombre de transaction et le compteur de montant de transaction peuvent être mis à zéro,
- la valeur seuil d'un nombre de transactions et la valeur seuil d'un montant total de transaction stockées par le dispositif électronique 110 peuvent être mises à jour en fonction de la valeur seuil d'un nombre de transactions et de la valeur seuil d'un montant total de transaction reçues à l'étape F340, et/ou
- l'identifiant de la procédure du mode de secours stocké par le dispositif électronique peut être mis à jour en fonction de l'identifiant de la procédure reçu à l'étape F340, et/ou
- l'indicateur du mode de secours est mis à la valeur « 1 ».

La **figure 4** représente une variante de la phase d'activation, mise en œuvre par le système 100' de la figure 2 ou par tout système de gestion comportant une carte à puce apte à réaliser une transaction selon le mode normal de transaction ou le mode de secours de transaction.

Cette variante de phase d'activation diffère de la phase d'activation décrite en référence à la figure 3 en ce que le serveur 122 du mode de secours envoie, à l'étape E440, le premier message M1 au deuxième dispositif électronique 160 (par exemple à l'application du deuxième dispositif électronique 160) via le premier réseau de télécommunications 140. Les étapes E320 et/ou E330 précédemment décrites en référence à la figure 3 peuvent ainsi être mises en œuvre par le serveur 122 du mode de secours suite à l'étape 310 et avant l'étape E440.

Sous réception G440 du premier message M1, le deuxième dispositif électronique 160 peut afficher le message d'information et/ou authentifier l'utilisateur du premier dispositif électronique 110 (étape G450), typiquement au moyen d'un code d'authentification ou d'une donnée biométrique de l'utilisateur.

Le deuxième dispositif électronique 160 peut ensuite émettre une notification demandant à l'utilisateur de positionner le premier dispositif électronique 110 près du deuxième dispositif électronique 160 de sorte qu'ils puissent communiquer via le troisième réseau de télécommunications 170.

Le deuxième dispositif électronique 160 transmet la commande d'activation CA dans une étape G455, via le quatrième réseau de télécommunications 170, au premier dispositif électronique 110, cette étape G455 étant typiquement mise en œuvre lorsque l'utilisateur est authentifié. Le premier dispositif électronique 110 met alors en œuvre les étapes F360 et F370, précédemment décrites en référence à la figure 3.

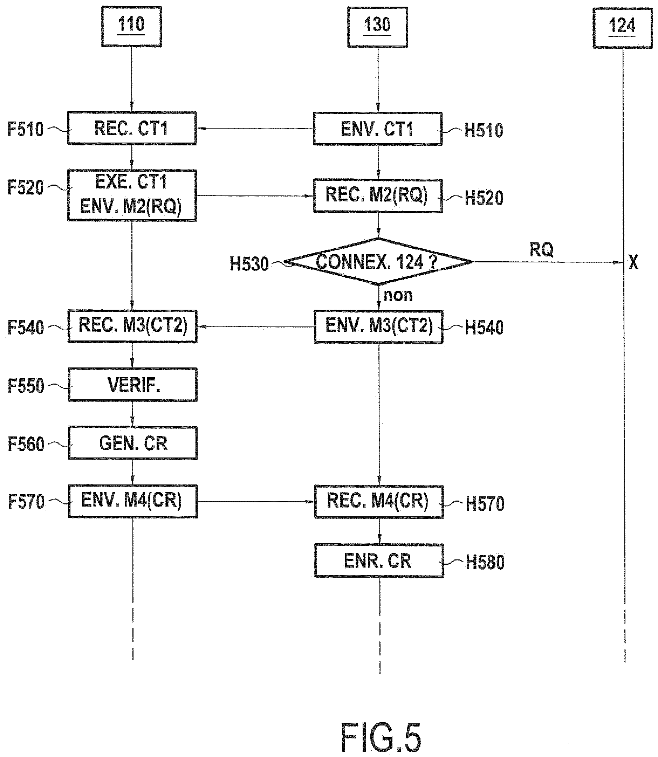

La **figure 5** représente une phase de paiement de procédés de gestion conformes à des exemples de modes de réalisation de l'invention. Ladite phase de paiement peut être mise en œuvre par le système 100 de la figure 1 ou le système 100' de la figure 2, après la phase d'activation de la procédure PMS du mode de secours de la figure 3 ou de la figure 4.

Dans une étape H510, le lecteur 130 envoie une première commande CT1 de transaction, cette première commande CT1 étant typiquement une commande « Generate AC ». La première commande CT1 de transaction est typiquement envoyée via le deuxième réseau de télécommunications 150.

Plusieurs autres commandes peuvent être échangées entre le lecteur 130 et le premier dispositif électronique 110 avant l'envoi de la première commande CT1 « Generate AC ». La première commande CT1 « Generate AC » permet de réaliser la transaction et de fournir un résultat.

L'étape H510 est mise en œuvre lorsque l'utilisateur du premier dispositif électronique 110 souhaite effectuer une transaction avec l'utilisateur du lecteur 130, et est ainsi envoyée suite à une initialisation d'une transaction entre le premier dispositif électronique 110 et le lecteur 130.

Après réception F510 de la première commande CT1 de transaction, le premier dispositif électronique 110 exécute ladite première commande CT1 de transaction, dans une étape F520.

La procédure PMS du mode de secours étant activée, le premier dispositif électronique 110 envoie, lors de l'exécution de la première commande CT1 de transaction, un deuxième message M2 comprenant une requête de consultation RQ du serveur 124 du mode normal de transaction. Le deuxième message M2 peut être envoyé au lecteur 130, via le deuxième réseau de télécommunications 150.

Le lecteur 130 reçoit le deuxième message M2 (étape H520), puis tente de se connecter au serveur 124 du mode normal en envoyant au serveur 124 du mode normal la requête de consultation RQ du message M2 (étape H530) via le troisième réseau de télécommunications 126.

La procédure PMS du mode de secours étant activée, le serveur 124 du mode normal ne répond pas à la requête de consultation RQ, et la tentative de connexion du lecteur 130 au serveur 124 du mode normal échoue.

Le lecteur 130 envoie alors, au premier dispositif électronique 110, typiquement via le deuxième réseau de télécommunications 150, un troisième message M3 comprenant une deuxième commande de transaction, et pouvant comprendre au moins une donnée de transaction (étape H540). La deuxième commande est typiquement une commande « Generate AC », et indique que la connexion au serveur 124 du mode normal a échoué.

Sous réception F540 du troisième message M3, dans une étape F550, le premier dispositif électronique 110 exécute la deuxième commande en procédant à au moins une vérification liée à la transaction (étape F550).

Chaque vérification est typiquement basée sur une donnée de transaction du troisième message M3, la donnée étant par exemple une date de la transaction ou un montant de transaction.

Par exemple, le premier dispositif électronique 110 vérifie que la date de transaction est comprise entre la date de début de la procédure PMS et la date de fin de la procédure PMS stockées dans le premier dispositif électronique 110.

Si la date de transaction est antérieure à la date de début ou postérieure à la date de fin de la procédure PMS, le premier dispositif électronique 110 désactive ladite procédure PMS, typiquement en mettant l'indicateur du mode de secours à « 0 ». La transaction est par la suite traitée en mode normal.

Le premier dispositif électronique 110 peut aussi incrémenter le compteur de nombre de transactions d'une unité.

Ensuite, le premier dispositif électronique 110 peut vérifier que le compteur de nombre de transaction incrémenté est inférieur à la valeur seuil de nombre de transaction.

Si le compteur de nombre de transaction incrémenté est supérieur à la valeur seuil de nombre de transaction, le premier dispositif électronique 110 désactive la procédure PMS du mode de secours, typiquement en mettant l'indicateur du mode de secours à « 0 », et la transaction est par la suite traitée en mode normal.

Le premier dispositif électronique 110 peut aussi incrémenter le compteur de montant de transaction, du montant de la transaction du troisième message M3, puis vérifier que le compteur de nombre de transaction incrémenté est inférieur à la valeur seuil de nombre de transaction que le compteur de montant de transaction est inférieur à une valeur seuil de montant de transaction.

Si le compteur de montant de transaction incrémenté est supérieur à la valeur seuil de montant de transaction, le premier dispositif électronique 110 désactive la procédure PMS du mode de secours, typiquement en mettant l'indicateur du mode de secours à « 0 », et la transaction est par la suite traitée en mode normal.

Dans le cas où la ou les vérifications effectuées sont réussies, le premier dispositif électronique 110 peut accepter la transaction.

Suite à la réception du troisième message M3, typiquement après la mise en œuvre de la ou des vérifications, le premier dispositif électronique 110 peut générer un cryptogramme CR, dans une étape F560, ledit cryptogramme CR étant généré au moyen de la deuxième clef dédiée au mode de secours, ladite deuxième clef étant typiquement symétrique.

Le cryptogramme CR généré comprend au moins une information sur la procédure PMS du mode de secours, parmi les informations sur la procédure PMS du mode de secours suivantes :
- la date de début de ladite procédure PMS,
- la date de fin de ladite procédure PMS,
- l'identifiant de ladite procédure PMS,
- une indication selon laquelle ledit cryptogramme CR est généré lors de la mise en œuvre de ladite procédure PMS.

Le cryptogramme CR est généré et envoyé en cas d'acceptation de la transaction, mais aussi en cas de refus de la transaction.

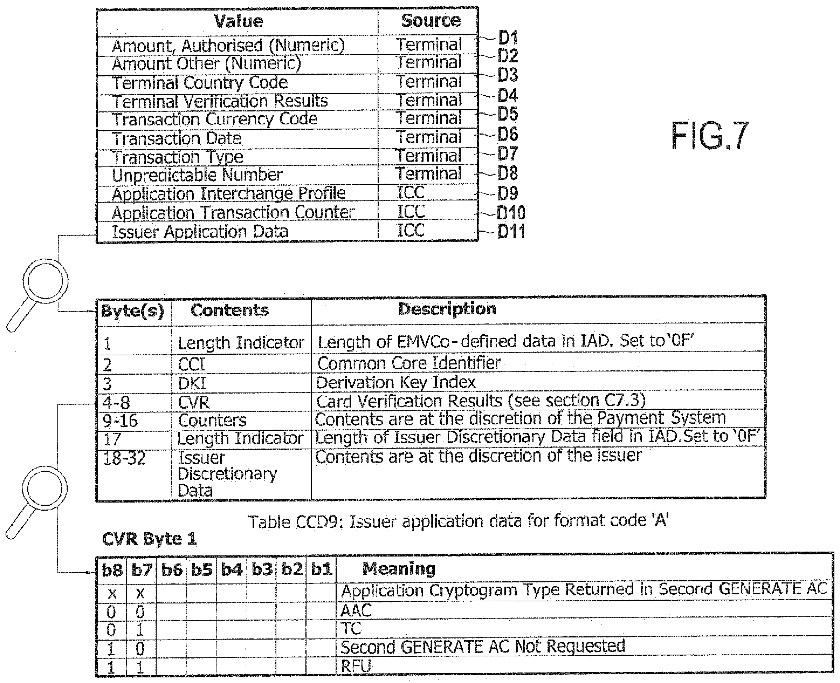

La **figure 7** représente un exemple de données D1 à D11 utilisées pour la génération du cryptogramme. Les données D1 à D8 proviennent du lecteur 130, et les données D9 à D11 sont des données du premier dispositif électronique 110, comme défini dans le document « EMV 4.3, Book 2, 8.1.1 ».

La donnée D11, concernant l'application du premier dispositif électronique 110, comprend 32 Bytes, les Bytes 18 à 32 étant réservés à l'opérateur de transactions ayant implémenté l'application, comme défini dans le document « EMV 4.3, Book 3, C7.2 ». Ces Bytes 18 à 32 comprennent une ou plusieurs informations parmi les informations sur la procédure PMS telles que décrites ci-dessus.

En outre, les bytes 4 à 8, du champ CVR (pour « Card Verification Results », en terminologie anglo-saxonne) de la donnée D11, peuvent comprendre une information sur le type du cryptogramme, une information selon laquelle la transaction est refusée (donnée AAC), une information selon laquelle la transaction est acceptée (donnée TC), une indication selon laquelle ledit cryptogramme CR est généré lors de la mise en œuvre de ladite procédure PMS, etc. Typiquement, la valeur « RFU » dans le champ « CVR Byte 1 » du champ CVR peut comprendre une information selon laquelle la transaction est acceptée en mode d'urgence.

Le premier dispositif électronique 110 envoie ensuite au lecteur 130, typiquement via le premier réseau 140 ou le deuxième réseau 150, un quatrième message M4 comprenant le cryptogramme CR, et pouvant en outre comprendre une information selon laquelle la transaction s'est déroulée durant la procédure PMS du mode de secours (étape F570).

Le lecteur 130 reçoit le quatrième message M4 (étape H570), et enregistre le cryptogramme CR (étape H580). En cas de validation de la transaction, le lecteur 130 transmet au réseau 120 de transactions (typiquement au serveur 124 du mode normal) des informations concernant la transaction après la désactivation de la procédure PMS du mode de secours, de sorte que le serveur 124 du mode normal puisse traiter la transaction une fois que le réseau 120 de transactions est apte à fonctionner à nouveau normalement. Le serveur 124 du mode normal vérifie alors le cryptogramme CR.

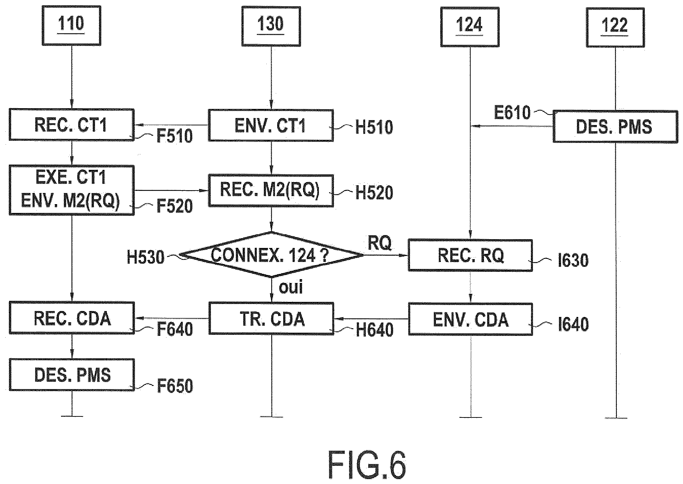

Comme le montre la **figure 6****,** après traitement de la panne ou de l'attaque, lorsque le réseau 120 de transactions est apte à fonctionner à nouveau normalement, le serveur 122 du mode de secours désactive, dans une étape E610, la procédure PMS du mode de secours.

Le serveur 124 du mode normal est alors apte à répondre à des requêtes de consultation telle que la requête de consultation RQ envoyée par le lecteur 130 à l'étape H530.

Ainsi, sous réception I630 de la requête de consultation RQ envoyée à l'étape H530, le serveur 124 du mode normal envoie au lecteur 130 une commande de désactivation CDA de la procédure PMS du mode de secours, typiquement via le troisième réseau de télécommunications 126 (étape I640), le lecteur 130 transmettant (étape H640) ladite commande de désactivation CDA au premier dispositif électronique 110, typiquement via le deuxième réseau de télécommunications 150.

Le premier dispositif électronique 110 reçoit F640 la commande de désactivation CDA, puis l'exécute afin de désactiver la procédure PMS du mode de secours (étape F650). La transaction est alors par la suite traitée en mode normal.

La commande de désactivation CDA est typiquement une commande script similaire aux commandes script définies par la norme EMV.

En variante, lorsque le serveur 122 du mode de secours désactive la procédure PMS du mode de secours, le serveur 122 du mode de secours envoie au premier dispositif électronique 110 la commande de désactivation CDA, typiquement via le premier réseau de télécommunications 140. La commande de désactivation CDA peut être envoyée sous réception de la requête de consultation RQ ou peut être envoyée après la désactivation de la procédure PMS par le serveur 122 du mode de secours, même si aucune transaction concernant le premier dispositif électronique 110 n'est en cours.

## Revendications

1. Procédé de gestion d'une procédure de secours d'un mode de secours de transaction, pouvant être activée en cas d'attaque informatique ou de panne sur un réseau (120) de transactions, mis en œuvre par un dispositif électronique (110) apte à réaliser une transaction selon un mode normal ou le mode de secours, ledit procédé comprenant les étapes suivantes :
• réception (F340, F455) d'une commande d'activation (CA) de ladite procédure du mode de secours, comprenant un identifiant de la procédure et une première donnée chiffrée,
• vérification (F360) de la commande d'activation (CA), comprenant une vérification de ladite première donnée chiffrée,
• si la vérification de la commande est réussie, activation (F370) de la procédure (PMS) de secours,
• après l'activation (F370) de la procédure (PMS) de secours et suite à une initialisation d'une transaction entre le dispositif électronique (110) et un lecteur (130), envoi (F520) d'un message (M2) audit lecteur (130) comprenant une requête de consultation (RQ) d'un serveur (124) de mode normal du réseau (120) de transactions, et
• sous réception (F540) d'un message (M3) indiquant que la consultation du serveur (124) du mode normal a échoué, envoi (F570) audit lecteur (130) d'un cryptogramme (CR) comprenant au moins une information sur ladite procédure (PMS).

2. Procédé selon la revendication 1, dans lequel la première donnée chiffrée est un code d'authentification calculé en fonction d'une clef privée, ladite clef privée étant obtenue en utilisant l'identifiant de ladite procédure.

3. Procédé selon la revendication 1 ou 2, dans lequel l'étape de vérification (F360) comprend une vérification que la valeur de l'identifiant de ladite procédure (PMS) est supérieure à la valeur d'un identifiant de procédure stocké dans le dispositif électronique (110).

4. Procédé selon l'une quelconque des revendications 1 à 3, dans lequel l'au moins une information sur ladite procédure (PMS) du cryptogramme est une information parmi les informations suivantes :
• une date de début de ladite procédure (PMS),
• une date de fin de ladite procédure (PMS),
• ledit identifiant de ladite procédure (PMS),
• une indication selon laquelle ledit cryptogramme (CR) est généré lors de la mise en œuvre de ladite procédure (PMS).

5. Procédé selon l'une quelconque des revendications 1 à 4, dans lequel ledit message (M3) reçu comprend une date de la transaction, le procédé comprenant les étapes suivantes :
• vérification (F550) que la date de transaction est comprise entre une date de début et une date de fin de la procédure,
• si la date de transaction est antérieure à la date de début ou postérieure à la date de fin de la procédure, désactivation de ladite procédure.

6. Procédé selon l'une quelconque des revendications 1 à 5, dans lequel le message (M3) reçu comprend le montant de la transaction, le procédé comprenant les étapes suivantes :
• incrémentation d'un compteur de nombre de transaction,
• incrémentation d'un compteur de montant de transaction,
• si le compteur de nombre de transaction incrémenté est inférieur à une valeur seuil de nombre de transaction et si le compteur de montant de transaction est inférieur à une valeur seuil de montant de transaction, une étape d'acceptation de la transaction.

7. Procédé selon l'une quelconque des revendications 1 à 6, comprenant une étape d'authentification (F350, G450) d'un utilisateur du dispositif électronique, l'étape de vérification (F360) de la commande d'activation (CA) étant mise en œuvre si l'étape d'authentification (F350, G450) est réussie.

8. Procédé selon l'une quelconque des revendications 1 à 7, comprenant une étape de désactivation (F650) de ladite procédure, sous réception (F640) d'une commande de désactivation (CDA) de ladite procédure (PMS).

9. Dispositif électronique (110) apte à mettre en œuvre un procédé selon l'une quelconque des revendications 1 à 8.

10. Programme d'ordinateur (P1) comportant des instructions pour l'exécution des étapes du procédé selon l'une quelconque des revendications 1 à 8 lorsque ledit programme est exécuté par un ordinateur.

11. Support d'enregistrement lisible par un ordinateur sur lequel est enregistré un programme d'ordinateur (P1) comprenant des instructions pour l'exécution des étapes du procédé selon l'une quelconque des revendications 1 à 8.

## Patentansprüche

1. Verfahren zur Verwaltung eines Sicherheitsvorgangs eines Sicherheitstransaktionsmodus, der im Falle eines Hackerangriffs oder einer Panne auf einem Transaktionsnetz (120) aktiviert werden kann und der durch eine elektronische Vorrichtung (110) umgesetzt wird, die dazu geeignet ist, eine Transaktion gemäß einem Normalmodus oder dem Sicherheitsmodus zu realisieren, wobei das Verfahren die folgenden Schritte umfasst:
• Empfang (F340, F455) eines Aktivierungsbefehls (CA) des Vorgangs des Sicherheitsmodus, umfassend eine Kennung des Vorgangs und eine erste Zahlenangabe,
• Verifizierung (F360) des Aktivierungsbefehls (CA), umfassend eine Verifizierung der ersten Zahlenangabe,
• wenn die Verifizierung des Befehls erfolgreich ist, Aktivierung (F370) des Sicherheitsvorgangs (PMS),
• nach der Aktivierung (F370) des Sicherheitsvorgangs (PMS) und im Anschluss an eine Initialisierung einer Transaktion zwischen der elektronischen Vorrichtung (110) und einem Lesegerät (130), Sendung (F520) einer Nachricht (M2) an das Lesegerät (130), die eine Konsultationsanforderung (RQ) eines Servers (124) im Normalmodus des Transaktionsnetzes (120) umfasst, und
• beim Empfang (F540) einer Nachricht (M3), die angibt, dass die Konsultation des Servers (124) im Normalmodus gescheitert ist, Sendung (F570) eines Kryptogramms (CR), das zumindest eine Information über den Vorgang (PMS) umfasst, an das Lesegerät (130).

2. Verfahren nach Anspruch 1, wobei die erste Zahlenangabe ein Authentifizierungscode ist, der abhängig von einem privaten Schlüssel berechnet wird, wobei der private Schlüssel erhalten wird, indem die Kennung des Vorgangs verwendet wird.

3. Verfahren nach Anspruch 1 oder 2, wobei der Schritt der Verifizierung (F360) eine Verifizierung umfasst, dass der Wert der Kennung des Vorgangs (PMS) größer als der Wert einer Kennung des Vorgangs ist, die in der elektronischen Vorrichtung (110) gespeichert ist.

4. Verfahren nach einem der Ansprüche 1 bis 3, wobei die zumindest eine Information über den Vorgang (PMS) des Kryptogramms eine Information aus den folgenden Informationen ist:
• einem Anfangsdatum des Vorgangs (PMS),
• einem Enddatum des Vorgangs (PMS),
• der Kennung des Vorgangs (PMS),
• einer Angabe, gemäß derer das Kryptogramm (CR) bei der Umsetzung des Vorgangs (PMS) erzeugt wird.

5. Verfahren nach einem der Ansprüche 1 bis 4, wobei die empfangene Nachricht (M3) ein Transaktionsdatum umfasst und das Verfahren die folgenden Schritte umfasst:
• Verifizierung (F550), dass das Transaktionsdatum zwischen einem Anfangsdatum und einem Enddatum des Vorgangs liegt,
• wenn das Transaktionsdatum vor dem Anfangsdatum oder nach dem Enddatum des Vorgangs ist, Deaktivierung des Vorgangs.

6. Verfahren nach einem der Ansprüche 1 bis 5, wobei die empfangene Nachricht (M3) den Transaktionsbetrag umfasst und das Verfahren die folgenden Schritte umfasst:
• Inkrementierung eines Zählers der Transaktionsanzahl,
• Inkrementierung eines Zählers des Transaktionsbetrags,
• wenn der inkrementierte Zähler der Transaktionsanzahl kleiner als ein Grenzwert der Transaktionsanzahl ist und wenn der Zähler des Transaktionsbetrags kleiner als ein Grenzwert des Transaktionsbetrags ist, einen Schritt der Annahme der Transaktion.

7. Verfahren nach einem der Ansprüche 1 bis 6, umfassend einen Schritt der Authentifizierung (F350, G450) eines Benutzers der elektronischen Vorrichtung, wobei der Schritt der Verifizierung (F360) des Aktivierungsbefehls (CA) umgesetzt wird, wenn der Schritt der Authentifizierung (F350, G450) erfolgreich ist.

8. Verfahren nach einem der Ansprüche 1 bis 7, umfassend einen Schritt der Deaktivierung (F650) des Vorgangs beim Empfang (F640) eines Deaktivierungsbefehls (CDA) des Vorgangs (PMS).

9. Elektronische Vorrichtung (110), die dazu geeignet ist, ein Verfahren nach einem der Ansprüche 1 bis 8 umzusetzen.

10. Computerprogramm (P1), das Anweisungen für die Ausführung der Schritte des Verfahrens nach einem der Ansprüche 1 bis 8 beinhaltet, wenn das Programm von einem Computer ausgeführt wird.

11. Aufzeichnungsmedium, das von einem Computer lesbar ist und auf dem ein Computerprogramm (P1) aufgezeichnet ist, das Anweisungen für die Ausführung der Schritte des Verfahrens nach einem der Ansprüche 1 bis 8 umfasst.

## Claims

1. A method for managing a backup procedure of a transaction backup mode, which can be activated in the event of a computer attack or a failure on a transaction network (120), implemented by an electronic device (110) able to carry out a transaction in a normal mode or in the backup mode, said method comprising the following steps:
• receiving (F340, F455) a command of activation (CA) of said procedure of the backup mode, comprising an identifier of the procedure and a first encrypted data,
• verifying (F360) the activation command (CA), comprising a verification of said first encrypted data,
• if the verification of the command is successful, activating (F370) the backup procedure (PMS),
• after the activation (F370) of the backup procedure (PMS) and following an initialization of a transaction between the electronic device (110) and a reader (130), sending (F520) a message (M2) to said reader (130) comprising a request to consult (RQ) a normal mode server (124) of the transaction network (120), and
• upon receipt (F540) of a message (M3) indicating that the consultation of the server (124) of the normal mode has failed, sending (F570) to said reader (130) a cryptogram (CR) comprising at least one information on said procedure (PMS).

2. The method according to claim 1, wherein the first encrypted data is an authentication code calculated based on a private key, said private key being obtained by using the identifier of said procedure.

3. The method according to claim 1 or 2, wherein the verification step (F360) comprises a verification that the value of the identifier of said procedure (PMS) is greater than the value of a procedure identifier stored in the electronic device (110).

4. The method according to any one of claims 1 to 3, wherein the at least one piece of information on said procedure (PMS) of the cryptogram is one piece of information among the following pieces of information:
• a start date of said procedure (PMS),
• an end date of said procedure (PMS),
• said identifier of said procedure (PMS),
• an indication according to which said cryptogram (CR) is generated during the implementation of said procedure (PMS).

5. The method according to any one of claims 1 to 4, wherein said received message (M3) comprises a date of the transaction, the method comprising the following steps:
• verifying (F550) that the transaction date is comprised between a start date and an end date of the procedure,
• if the transaction date is prior to the start date or subsequent to the end date of the procedure, deactivating said procedure.

6. The method according to any one of claims 1 to 5, wherein the received message (M3) comprises the amount of the transaction, the method comprising the following steps:
• incrementing a transaction number counter,
• incrementing a transaction amount counter,
• if the incremented transaction number counter is less than a transaction number threshold value and if the transaction amount counter is less than a transaction amount threshold value, accepting the transaction.

7. The method according to any one of claims 1 to 6, comprising a step of authenticating (F350, G450) a user of the electronic device, the step of verifying (F360) the activation command (CA) being implemented if the authentication step (F350, G450) is successful.

8. The method according to any one of claims 1 to 7, comprising a step of deactivating (F650) said procedure, upon receipt (F640) of a command of deactivation (CDA) of said procedure (PMS).

9. An electronic device (110) able to implement a method according to any one of claims 1 to 8.

10. A computer program (P1) including instructions for executing the steps of the method according to any one of claims 1 to 8 when said program is executed by a computer.

11. A recording medium readable by a computer on which is recorded a computer program (P1) comprising instructions for executing the steps of the method according to any one of claims 1 to 8.
